# EUROPÄISCHE PATENTSCHRIFT

(11) **EP 3 663 846 B1**
(45) Veröffentlichungstag und Bekanntmachung des Hinweises auf die Patenterteilung: **27.01.2021**
(21) Anmeldenummer: 18210032.1
(22) Anmeldetag: 04.12.2018
(51) Int. Cl.: G03B 3/10

(54) **FOKUSSIEREINRICHTUNG**
FOCUSSING DEVICE
DISPOSITIF DE FOCALISATION

(43) Veröffentlichungstag der Anmeldung: 10.06.2020
(73) Patentinhaber: SICK AG, 79183 Waldkirch (DE)
(72) Erfinder: SCHNEIDER, Florian, 79276 Reute (DE); SCHÄFER, Georg, 79098 Freiburg (DE); PFEIL, Jonathan, 79227 Schallstadt (DE)
(74) Vertreter: Manitz Finsterwald Patent- und Rechtsanwaltspartnerschaft mbB

(56) Entgegenhaltungen:
- JP-B2- 4 761 126
- US-A1- 2010 165 132
- US-B2- 10 126 521

## Beschreibung

Die vorliegende Erfindung betrifft eine Fokussiereinrichtung für ein optisches System, das einen Träger und ein an diesem angeordnetes Objektiv aufweist, wobei die Fokussiereinrichtung umfasst:
einen ersten Führungsabschnitt, der zur Befestigung am Träger ausgebildet oder einstückig mit diesem ausgeführt ist,
einen zweiten Führungsabschnitt, der eine Halterung für das Objektiv bildet, wenigstens ein Federelement, das eine elastische Verbindung des ersten Führungsabschnitts mit dem zweiten Führungsabschnitt bildet, und einen Aktuator zum Verstellen des zweiten Führungsabschnitts gegenüber dem ersten Führungsabschnitt in und entgegen einer Verstellrichtung, wobei das wenigstens eine Federelement zumindest bereichsweise flächig ausgebildet ist.

Derartige Fokussiereinrichtungen kommen in Sensoren, Scannern, Kameras und anderen optischen Systemen zum Einsatz und dienen insbesondere dazu, den Abstand des Objektivs von einer Lichtempfangsfläche anzupassen. Vorzugsweise sind Fokussiereinrichtungen der genannten Art für einen Autofokus-Betrieb ausgelegt. Bei dem Träger kann es sich insbesondere um ein Gehäuse oder einen Grundrahmen des optischen Systems handeln. Das Federelement kann als Blattfeder ausgeführt sein. Eine entsprechende Fokussiereinrichtung ist in der US 4 615 585 offenbart.

Man ist bestrebt, Fokussiereinrichtungen mit langer Lebensdauer und hoher Verstellgeschwindigkeit bereitzustellen. Eine entsprechende mechanische Belastbarkeit kann jedoch häufig nur unter Verwendung komplexer Konstruktionen und einer hohen Teilezahl erreicht werden. Dies führt zu hohen Herstellungskosten.

Die US 2010/0165132 A1 offenbart eine bewegliche Aufhängung für den Bildsensor einer Digitalkamera, wobei die Aufhängung zwei beabstandete Blattfedern umfasst.

Optikhalterungen mit Blattfedern sind auch in der JP 4761126 und in der US 10,126,521 B2 offenbart.

Es besteht das Bedürfnis, eine Fokussiereinrichtung anzugeben, die trotz geringer Herstellungskosten eine hohe Lebensdauer aufweist und hohe Verstellgeschwindigkeiten ermöglicht.

Die Lösung der Aufgabe erfolgt durch eine Fokussiereinrichtung mit den Merkmalen des Anspruchs 1.

Erfindungsgemäß weist das wenigstens eine Federelement wenigstens einen Versteifungsbereich auf, in welchem ein erstes Flächenstück des Federelements gegenüber einem zweiten Flächenstück des Federelements entlang einer Biegekante umgebogen ist. Aufgrund des umgebogenen Flächenstücks ergibt sich im Versteifungsbereich eine erhöhte mechanische Stabilität des Federelements, woraus eine verbesserte Lebensdauer der Fokussiereinrichtung resultiert. Zudem kann durch das Umbiegen des Flächenstücks die Federhärte angepasst werden. Durch die Erfindung ergibt sich die Möglichkeit, ohne Stabilitätseinbußen die Materialstärke des Federelements zu verringern oder ein kostengünstigeres Material zur Fertigung des Federelements zu verwenden,

Die Erfindung sieht vor, dass das Federelement an der Biegekante eine Perforierung aufweist. Dies erleichtert das positionsgenaue Umbiegen des ersten Flächenstücks und vereinfacht so die Fertigung des Federelements. Eine Perforierung kann in relativ einfacher Weise durch Ätzen erzeugt werden.

Bei einer erfindungsgemäßen Fokussiereinrichtung können die beiden Führungsabschnitte zusammen mit dem verbindenden Federelement eine Parallelführung bilden. Bei der elastischen Verbindung der Führungsabschnitte über das Federelement kann es sich je nach Anwendung um eine direkte oder um eine indirekte Verbindung handeln. Das heißt es können zusätzliche Kopplungsbauteile vorgesehen sein. Um die Stabilität und/oder die Federhärte des wenigstens einen Federelements weiter zu erhöhen, kann zusätzlich zu dem ersten Flächenstück wenigstens ein weiteres Flächenstück gegenüber dem zweiten Flächenstück oder einem beliebigen anderen Flächenstück des Federelements entlang einer Biegekante umgebogen sein.

Der Aktuator ist vorzugsweise als elektromagnetischer Aktuator ausgeführt. Beispielsweise kann ein Tauchspulenaktuator oder ein Elektromotor zum Verstellen des zweiten Führungsabschnitts gegenüber dem ersten Führungsabschnitt vorgesehen sein.

Das Federelement ist vorzugsweise aus einem, insbesondere einlagigen, Blechteil gefertigt. Ein Blechteil ist besonders kostengünstig herzustellen und weist zudem nur ein geringes Eigengewicht auf. Insbesondere kann das Federelement aus einem geätzten Blechteil gefertigt sein.

Gemäß einer Ausführungsform der Erfindung verläuft die Biegekante in einer unbelasteten Grundstellung des Federelements quer zur Verstellrichtung und/oder in einer belasteten Auslenkungsstellung des Federelements schräg zur Verstellrichtung. Dies ist insofern vorteilhaft, als die Versteifung an eine Hauptbelastungsrichtung angepasst ist. Bevorzugt ist vorgesehen, dass die Biegekante einen geradlinigen Verlauf aufweist und/oder eine Außenkante des Federelements bildet.

Eine weitere Ausführungsform der Erfindung sieht vor, dass das Federelement an der Biegekante eine Materialschwächung aufweist. Dies erleichtert das positionsgenaue Umbiegen des ersten Flächenstücks und vereinfacht so die Fertigung des Federelements. Es ist möglich, durch teilweises Durchätzen des Federelements an der Biegekante eine Materialschwächung zu erzeugen.

Der erste Führungsabschnitt und der zweite Führungsabschnitt können jeweils als einstückiges Bauteil aus Metall oder Kunststoff ausgeführt sein. Dies ergibt eine besonders einfache und kostengünstige Konstruktion.

Bevorzugt weist das Federelement einen das zweite Flächenstück umfassenden Basisabschnitt auf, der sich in einer unbelasteten Grundstellung des Federelements in einer quer zur Verstellrichtung verlaufenden Federblattebene erstreckt. Insbesondere kann das Federelement so gestaltet sein, dass es sich in einer unbelasteten Grundstellung abgesehen von dem umgebogenen ersten Flächenstück sowie gegebenenfalls vorhandener weiterer umgebogener Flächenstücke in der Federblattebene erstreckt. Bei einem linearen Verstellen des zweiten Führungsabschnitts gegenüber dem ersten Führungsabschnitt mittels des Aktuators wird das Federelement geringfügig aus der Federblattebene herausgebogen.

Das Federelement kann rahmenförmig sein, um ausreichend Bauraum für die Anordnung des Objektivs bereitzustellen.

In jeweiligen Eckbereichen des rahmenförmigen Federelements können Durchführungen für Befestigungsmittel vorgesehen sein. Die Durchführungen können in einfacher Weise durch Ätzen hergestellt sein. Die Führungsabschnitte können mit Gewindelöchern versehen sein, die mit den Durchführungen des rahmenförmigen Federelements fluchten. Das Federelement kann dann in einfacher Weise mit dem ersten Führungsabschnitt und dem zweiten Führungsabschnitt verschraubt werden.

Vorzugsweise ist vorgesehen, dass der zweite Führungsabschnitt in einer zentralen Ausnehmung des rahmenförmigen Federelements angeordnet ist oder in diese hineinreicht. Diese Ausgestaltung ist besonders platzsparend.

Beispielsweise kann das rahmenförmige Federelement zwei Befestigungsholme und zwei Verbindungsholme umfassen, wobei die Befestigungsholme jeweils zumindest im Wesentlichen vollflächig an den Führungsabschnitten anliegen und/oder sich die Verbindungsholme von einem Führungsabschnitt zum anderen Führungsabschnitt erstrecken. Vorzugsweise ist der Versteifungsbereich des Federelements an einem der zwei Verbindungsholme ausgebildet. Besonders bevorzugt weisen beide Verbindungsholme wenigstens einen Versteifungsbereich mit jeweils wenigstens einem umgebogenen Flächenstück auf.

Eine weitere Ausführungsform der Erfindung sieht vor, dass der erste Führungsabschnitt eine zentrale Durchführung aufweist und der zweite Führungsabschnitt in der zentralen Durchführung angeordnet ist oder in diese hineinreicht. Diese Ausgestaltung beansprucht nur wenig Bauraum. Vorzugsweise ist der erste Führungsabschnitt rahmenförmig ausgebildet.

Gemäß einer weiteren Ausführungsform der Erfindung ist das erste Flächenstück gegenüber dem zweiten Flächenstück um wenigstens 70° und höchstens um 100°, insbesondere um etwa 90°, umgebogen. Dadurch wird ein besonders ausgeprägter Versteifungseffekt erzielt.

Eine spezielle Ausgestaltung sieht vor, dass ein drittes Flächenstück des Federelements ebenfalls gegenüber dem zweiten Flächenstück um wenigstens 70° und höchstens um 100°, insbesondere um etwa 90°, umgebogen ist, vorzugsweise in die gleiche Richtung. Die Stabilität des Federelements wird hierdurch weiter erhöht. Außerdem ergibt sich eine besonders hohe Federhärte.

Das erste Flächenstück und das dritte Flächenstück können an gegenüberliegenden Längsseiten eines das zweite Flächenstück bildenden streifenförmigen Abschnitts des Federelements vorgesehen sein, insbesondere derart, dass der streifenförmige Abschnitt einen U-förmigen Querschnitt aufweist. Durch Erzeugen eines entsprechenden Profils kann auf schnelle und einfache Weise eine ausgeprägte Stabilitätserhöhung erzielt werden. Vorzugsweise sind das erste Flächenstück und das dritte Flächenstück lediglich in einem zentralen Teilbereich des streifenförmigen Abschnitts vorgesehen. Die Endabschnitte bleiben vorzugsweise frei von rechtwinklig abgebogenen Flächenstücken, sodass sie problemlos an die Führungsabschnitte angeschraubt werden können. Insbesondere können das erste Flächenstück und das dritte Flächenstück an gegenüberliegenden Längsseiten eines wie oben beschriebenen Verbindungsholms vorgesehen sein.

Das Federelement kann einen weiteren streifenförmigen Abschnitt aufweisen, wobei an gegenüberliegenden Längsseiten des weiteren streifenförmigen Abschnitts ein viertes und ein fünftes Flächenstück des Federelements jeweils gegenüber einer Basisebene des weiteren streifenförmigen Abschnitts um wenigstens 70° und höchstens 100°, insbesondere um etwa 90°, umgebogen sind. Diese Ausgestaltung geht mit einer besonders hohen Stabilität einher. Bevorzugt sind die streifenförmigen Abschnitte an entgegengesetzten Seiten des Federelements angeordnet und/oder erstrecken sich parallel zueinander. Die streifenförmigen Abschnitte können Verbindungsholme bilden, die sich von einem Führungsabschnitt zum anderen Führungsabschnitt erstrecken.

Wenigstens ein Verstärkungs-Flächenstück des Federelements kann gegenüber einem Basis-Flächenstück um 180° umgebogen sein, insbesondere derart, dass sich ein doppellagiger Abschnitt ergibt. Das Federelement kann also ein vollständig umgeklapptes Flächenstück umfassen, welches die Stabilität weiter erhöht. Das Verstärkungs-Flächenstück kann länglich sein und sich quer zur Verstellrichtung erstrecken. Weiterhin kann der Versteifungsbereich länglich sein und sich quer zu dem länglichen Verstärkungs-Flächenstück erstrecken.

Vorzugsweise ist das Federelement im Bereich des Verstärkungs-Flächenstücks an dem ersten Führungsabschnitt oder an dem zweiten Führungsabschnitt befestigt. Dadurch wird einer übermäßigen Materialbeanspruchung im Bereich der Befestigung entgegengewirkt. Um eine entsprechende Befestigung des Federelements zu ermöglichen, können Durchführungen für Befestigungsmittel wie Schrauben durch den doppellagigen Bereich hindurchgehen. Vorzugsweise umfasst das Federelement zwei gegenüberliegende doppellagige Abschnitte, um eine verbesserte Befestigung des Federelements an beiden Führungsabschnitten zu gewährleisten.

Bei einer rahmenförmigen Ausgestaltung des Federelements sind vorzugsweise an zwei gegenüberliegenden Rahmenseiten Verstärkungs-Flächenstücke wie vorstehend beschrieben vorgesehen, während an den zwei anderen gegenüberliegenden Rahmenseiten Versteifungsbereiche wie vorstehend beschrieben vorgesehen sind. Insbesondere können bei einer Ausbildung des Federelements mit zwei Befestigungsholmen und zwei Verbindungsholmen entsprechende Verstärkungs-Flächenstücke an den Befestigungsholmen vorgesehen sein und/oder entsprechende Versteifungsbereiche an den Verbindungsholmen vorgesehen sein.

Gemäß einer weiteren Ausführungsform der Erfindung sind für die elastische Verbindung des ersten Führungsabschnitts mit dem zweiten Führungsabschnitt zwei wie oben beschriebene zumindest bereichsweise flächig ausgebildete Federelemente vorgesehen, die jeweils einen Versteifungsbereich aufweisen, in welchem ein erstes Flächenstück gegenüber einem zweiten Flächenstück entlang einer Biegekante umgebogen ist, wobei sich die Federelemente parallel beabstandet zueinander erstrecken. Bei dieser Ausgestaltung ist das in dem zweiten Führungsabschnitt gehaltene Objektiv besonders zuverlässig geführt. Die beiden parallelen Federelemente können insbesondere wie vorstehend beschrieben ausgeführt sein. Vorzugsweise sind die zwei Federelemente baugleich ausgeführt. Bei Bedarf können für die elastische Verbindung der Führungsabschnitte auch mehr als zwei Federelemente vorgesehen sein, die sich parallel beabstandet zueinander erstrecken.

Die Federelemente können an entgegengesetzten Stirnseiten des ersten Führungsabschnitts und/oder des zweiten Führungsabschnitts angebracht sein. Dies ergibt eine besonders kompakte Bauweise.

Die Erfindung betrifft auch einen optischen Sensor, insbesondere einen Codeleser, mit einem Lichtsender zum Aussenden von Sendelichtstrahlen und/oder mit einem Lichtempfänger zum Empfangen von Empfangslichtstrahlen, einem Objektiv als Sammeloptik für die Sendelichtstrahlen und/oder die Empfangslichtstrahlen und einer Fokussiereinrichtung zum Verstellen des Objektivs.

Erfindungsgemäß ist die Fokussiereinrichtung des optischen Sensors wie vorstehend beschrieben ausgestaltet, wobei der erste Führungsabschnitt an einem Träger des optischen Sensors befestigt oder einstückig mit diesem ausgebildet ist und das Objektiv in dem zweiten Führungsabschnitt gehalten ist.

Optische Sensoren werden in vielen Bereichen der Industrie zur Überwachung, Absicherung und Informationserfassung eingesetzt. Codeleser wie zum Beispiel Barcode-Scanner oder Kamerasysteme dienen insbesondere in der Logistik und in der automatischen Fertigung dazu, in einem Code enthaltene Informationen auszulesen. Der Codeleser kann hierfür stationär an einem Förderband montiert sein, auf dem codetragende Objekte an dem Codeleser vorbeigeführt werden. Solche Systeme müssen im Allgemeinen in der Lage sein, die Codes in einem relativ großen Schärfentiefebereich zuverlässig auszulesen. Zu diesem Zweck stellt die Fokussiereinrichtung den Laserstrahl des Barcode-Scanners oder die Schärfenebene des Objektivs auf den entsprechenden Abstandswert ein. Es ist schwierig, eine Fokussiereinrichtung so zu gestalten, dass sie eine lange Lebensdauer aufweist, hohe Verstellgeschwindigkeiten ermöglicht und gleichzeitig kostengünstig zu fertigen ist.

Durch eine Parallelführung mit einem flächigen Federelement, das durch lokales Umbiegen eines Flächenstücks bereichsweise versteift ist, können die vorstehend genannten Anforderungen gleichzeitig erfüllt werden.

Die erfindungsgemäße Gestaltung einer Fokussiereinrichtung eignet sich in besonderem Maße für optische Codeleser, grundsätzlich jedoch auch für andere optische Systeme wie z. B. digitale Kameras.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine perspektivische Ansicht einer erfindungsgemäßen Fokussiereinrichtung für einen erfindungsgemäßen Codeleser.
- Fig. 2: ist eine Explosionsdarstellung der in Fig. 1 gezeigten Fokussiereinrichtung .
- Fig. 3: zeigt ein Federelement der in Fig. 1 gezeigten Fokussiereinrichtung in einem unbearbeiteten Ausgangszustand.

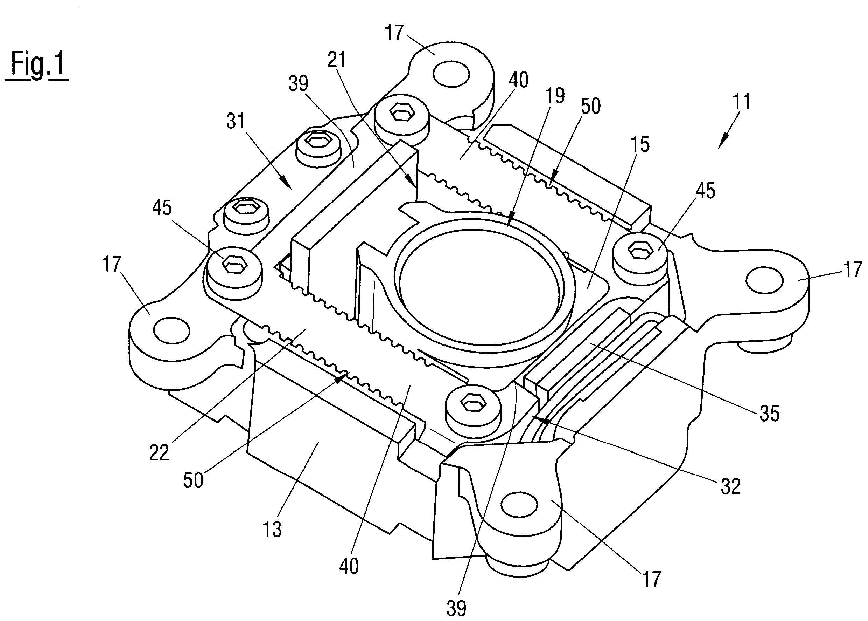

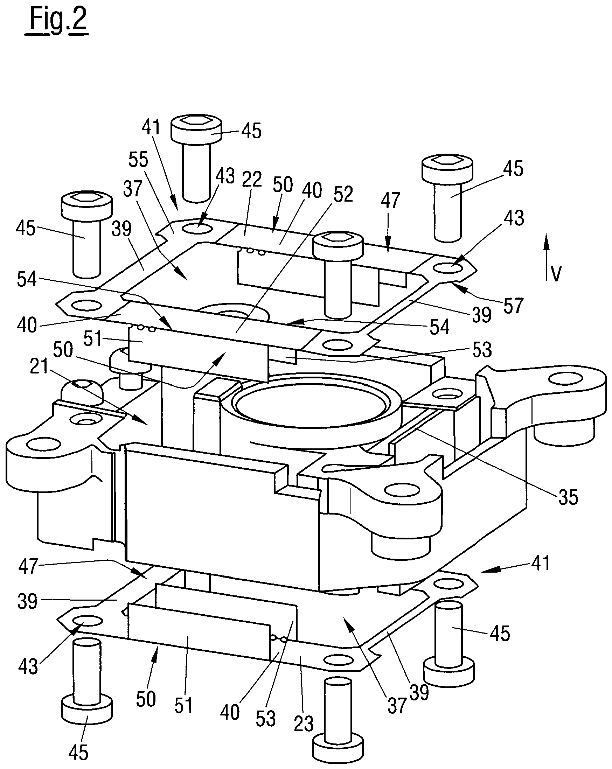

Die in Fig. 1 und 2 dargestellte, gemäß einer Ausführungsform der Erfindung gestaltete Fokussiereinrichtung 11 umfasst einen ersten Führungsabschnitt 13 und einen zweiten Führungsabschnitt 15, die vorzugsweise als einstückige Bauteile aus Metall oder Kunststoff, beispielsweise als Spritzgussbauteile, ausgeführt sind. Der erste Führungsabschnitt 13 ist zur Befestigung am Träger eines nicht dargestellten optischen Systems wie zum Beispiel eines Codelesers ausgebildet und hierfür mit Befestigungslaschen 17 versehen. Grundsätzlich könnte der erste Führungsabschnitt 13 auch einstückig mit einem solchen Träger ausgeführt sein. An dem zweiten Führungsabschnitt 15 ist eine Halterung 19 für ein nicht dargestelltes Objektiv ausgebildet. Wie gezeigt ist der erste Führungsabschnitt 13 rahmenförmig und weist eine zentrale Durchführung 21 auf, in welcher der zweite Führungsabschnitt 15 angeordnet ist.

Die Führungsabschnitte 13, 15 sind über eine Anordnung aus zwei flächigen Federelementen 22, 23 (Fig. 2) elastisch miteinander verbunden. Die beiden flächigen Federelemente 22, 23 sind jeweils mittels Schrauben 45 im Bereich eines ersten Endes 31 am ersten Führungsabschnitt 13 und im Bereich eines entgegengesetzten zweiten Endes 32 am zweiten Führungsabschnitt 15 angeschraubt. Sie erstrecken sich parallel beabstandet zueinander und bilden zusammen mit den Führungsabschnitten 13, 15 eine Parallelführung für das in der Halterung 19 aufgenommene Objektiv.

Ein lediglich schematisch gezeigter Aktuator 35, hier in Form eines Tauchspulenaktuators von grundsätzlich bekannter Bauart, dient zum Verstellen des zweiten Führungsabschnitts 15 gegenüber dem ersten Führungsabschnitt 13 in und entgegen einer Verstellrichtung V in Abhängigkeit von Steuersignalen, um so die Brennpunktlage des Objektivs relativ zu einem nicht dargestellten Bildsensor anzupassen.

Die Federelemente 22, 23 sind rahmenförmig und weisen jeweils eine zentrale Ausnehmung 37 auf, die mit der zentralen Durchführung 21 des ersten Führungsabschnitts 13 fluchtet. Speziell weisen die Federelemente 22, 23 jeweils zwei Befestigungsholme 39 und zwei Verbindungsholme 40 auf, wobei die Befestigungsholme 39 jeweils vollflächig an den Führungsabschnitten 13, 15 anliegen und sich die Verbindungsholme 40 jeweils von einem Führungsabschnitt 13 zum anderen Führungsabschnitt 15 erstrecken. In den Eckbereichen 41 der Federelemente 22, 23 sind Durchführungen 43 für die Schrauben 45 vorgesehen.

Wie in Fig. 2 zu erkennen ist, bilden die Befestigungsholme 39 und die Verbindungsholme 40 jeweils einen Basisabschnitt 47 des zugehörigen Federelements 22, 23, der eine rechtwinklig zur Verstellrichtung V verlaufende Federblattebene definiert.

Jedes der Federelemente 22, 23 weist in jeweiligen zentralen Bereichen der Verbindungsholme 40 Versteifungsbereiche 50 auf. Vorzugsweise erstrecken sich die Versteifungsbereiche 50 über wenigstens 25% und höchstens über 80% der Längsausdehnung der Verbindungsholme 40.

In den Versteifungsbereichen 50 ist jeweils ein erstes Flächenstück 51 gegenüber einem zum Basisabschnitt 47 gehörenden zweiten Flächenstück 52 entlang einer geradlinigen Biegekante 54 umgebogen. Weiterhin ist ein drittes Flächenstück 53 gegenüber dem zweiten Flächenstück 52 entlang einer weiteren geradlinigen Biegekante 54 umgebogen. Bei der dargestellten Ausführungsform sind das erste Flächenstück 51 und das dritte Flächenstück 53 jeweils um 90° gegenüber dem zweiten Flächenstück 52 abgebogen, sodass sich jeweils für die Verbindungsholme 40 im Versteifungsbereich 50 ein U-förmiger Querschnitt ergibt. Wie in Fig. 2 erkennbar sind die Federelemente 22, 23 derart an den Führungsabschnitten 13, 15 befestigt, dass die abgebogenen Flächenstücke 51, 53 der unterschiedlichen Federelemente 22, 23 aufeinander zu weisen.

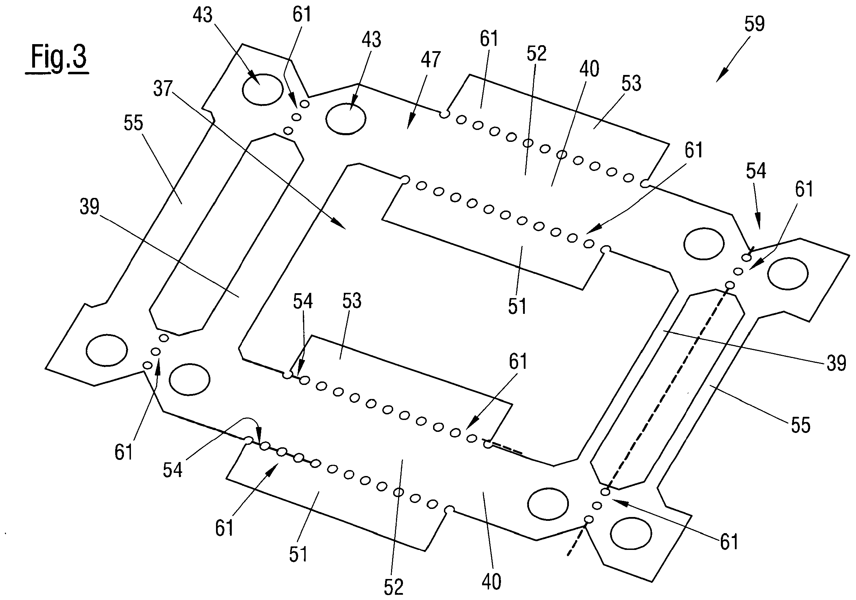

Die Befestigungsholme 39 sind doppellagig ausgeführt, um eine stabilere Anbringung der Federelemente 22, 23 an den Führungsabschnitten 13, 15 zu ermöglichen. Die doppellagigen Bereiche sind jeweils durch Umbiegen eines Verstärkungsflächenstücks 55 (Fig. 3) gegenüber einem Basis-Flächenstück 57 des Basisabschnitts 47 um 180° erzeugt.

Die Herstellung der Federelemente 22, 23 wird nachfolgend unter Bezugnahme auf Fig. 3 beschrieben, welche ein einlagiges Blechteil 59 als Ausgangselement für ein Federelement 22, 23 (Fig. 2) zeigt. Die ersten Flächenstücke 51, die dritten Flächenstücke 53 und die Verstärkungs-Flächenstücke 55 sind noch nicht gegenüber dem Basisabschnitt 47 umgebogen. Zum Definieren der Biegekanten 54 sind entsprechende Perforierungen 61 vorgesehen. Die Perforierungen 61 können durch Ätzen erzeugt werden.

Zum Erzeugen eines Federelements 22, 23 werden die ersten Flächenstücke 51 und die zweiten Flächenstücke 53 um 90° umgebogen, während die Verstärkungs-Flächenstücke 55 um 180° umgebogen werden. Die um 90° umgebogenen ersten Flächenstücke 51 und dritten Flächenstücke 53 bewirken im zentralen Bereich der Verbindungsholme 40 eine Versteifung, welche die Federhärte erhöht und die Stabilität verbessert. Die um 180° umgebogenen Verstärkungs-Flächenstücke 55 bewirken im Befestigungsbereich eine erhöhte Stabilität.

Durch die bereichsweise versteiften und verstärkten Federelemente 22, 23 ergibt sich trotz vergleichsweise geringer Herstellungskosten eine zuverlässige und haltbare Führung für das zu verstellende Objektiv. Eine erfindungsgemäße Fokussiereinrichtung 11 eignet sich für beliebige optische Systeme mit Fokusverstellung, insbesondere für optische Codeleser.

### Bezugszeichenliste

- 11: Fokussiereinrichtung
- 13: Erster Führungsabschnitt
- 15: Zweiter Führungsabschnitt
- 17: Befestigungslasche
- 19: Halterung
- 21: Zentrale Durchführung
- 22: Federelement
- 23: Federelement
- 31: Erstes Ende
- 32: Zweites Ende
- 35: Aktuator
- 37: Zentrale Ausnehmung
- 39: Befestigungsholm
- 40: Verbindungsholm
- 41: Eckbereich
- 43: Durchführung
- 45: Schraube
- 47: Basisabschnitt
- 50: Versteifungsbereich
- 51: Erstes Flächenstück
- 52: Zweites Flächenstück
- 53: Drittes Flächenstück
- 54: Biegekante
- 55: Verstärkungs-Flächenstück
- 57: Basis-Flächenstück
- 59: Blechteil
- 61: Perforierung
- V: Verstellrichtung

## Patentansprüche

1. Fokussiereinrichtung (11) für ein optisches System, das einen Träger und ein an diesem angeordnetes Objektiv aufweist, wobei die Fokussiereinrichtung umfasst:
einen ersten Führungsabschnitt (13), der zur Befestigung am Träger ausgebildet oder einstückig mit diesem ausgeführt ist,
einen zweiten Führungsabschnitt (15), der eine Halterung für das Objektiv bildet,
wenigstens ein Federelement (22, 23), das eine elastische Verbindung des ersten Führungsabschnitts (13) mit dem zweiten Führungsabschnitt (15) bildet, und
einen Aktuator (35) zum Verstellen des zweiten Führungsabschnitts (15) gegenüber dem ersten Führungsabschnitt (13) in und entgegen einer Verstellrichtung (V),
wobei das wenigstens eine Federelement (22, 23) zumindest bereichsweise flächig ausgebildet ist,
und wobei das wenigstens eine Federelement (22, 23) wenigstens einen Versteifungsbereich (50) aufweist, in welchem ein erstes Flächenstück (51) des Federelements (22, 23) gegenüber einem zweiten Flächenstück (52) des Federelements (22, 23) entlang einer Biegekante (54) umgebogen ist,
**dadurch gekennzeichnet, dass**
das Federelement (22, 23) eine Perforierung (61) an der Biegekante (54) aufweist, welche ein positionsgenaues Umbiegen des ersten Flächenstücks (51) erleichtert.

2. Fokussiereinrichtung nach Anspruch 1,
**dadurch gekennzeichnet, dass**
das Federelement (22, 23) aus einem, insbesondere einlagigen, Blechteil (59) gefertigt ist.

3. Fokussiereinrichtung nach Anspruch 1 oder 2,
**dadurch gekennzeichnet, dass**
die Biegekante (54) in einer unbelasteten Grundstellung des Federelements (22, 23) quer zur Verstellrichtung (V) verläuft
und/oder
das Federelement (22, 23) eine Materialschwächung an der Biegekante (54) aufweist.

4. Fokussiereinrichtung nach zumindest einem der vorstehenden Ansprüche,
**dadurch gekennzeichnet, dass**
der erste Führungsabschnitt (13) und der zweite Führungsabschnitt (15) jeweils als einstückiges Bauteil aus Metall oder Kunststoff ausgeführt sind.

5. Fokussiereinrichtung nach zumindest einem der vorstehenden Ansprüche,
**dadurch gekennzeichnet, dass**
das Federelement (22, 23) einen das zweite Flächenstück (52) umfassenden Basisabschnitt (47) aufweist, der sich in einer unbelasteten Grundstellung des Federelements (22, 23) in einer quer zur Verstellrichtung (V) verlaufenden Federblattebene erstreckt.

6. Fokussiereinrichtung nach zumindest einem der vorstehenden Ansprüche,
**dadurch gekennzeichnet, dass**
das Federelement (22, 23) rahmenförmig ist, wobei vorzugsweise Durchführungen (43) für Befestigungsmittel (45) in jeweiligen Eckbereichen (41) des rahmenförmigen Federelements (22, 23) vorgesehen sind.

7. Fokussiereinrichtung nach Anspruch 6,
**dadurch gekennzeichnet, dass**
der zweite Führungsabschnitt (15) in einer zentralen Ausnehmung (37) des rahmenförmigen Federelements (22, 23) angeordnet ist oder in diese hineinreicht.

8. Fokussiereinrichtung nach zumindest einem der vorstehenden Ansprüche,
**dadurch gekennzeichnet, dass**
der erste Führungsabschnitt (13) eine zentrale Durchführung (21) aufweist und der zweite Führungsabschnitt (15) in der zentralen Durchführung (21) angeordnet ist oder in diese hineinreicht.

9. Fokussiereinrichtung nach zumindest einem der vorstehenden Ansprüche,
**dadurch gekennzeichnet, dass**
das erste Flächenstück (51) gegenüber dem zweiten Flächenstück (52) um wenigstens 70° und höchstens um 100°, bevorzugt um etwa 90°, umgebogen ist.

10. Fokussiereinrichtung nach Anspruch 9,
**dadurch gekennzeichnet, dass**
ein drittes Flächenstück (53) des Federelements (22, 23) ebenfalls gegenüber dem zweiten Flächenstück (52) um wenigstens 70° und höchstens um 100°, insbesondere um etwa 90°, umgebogen ist, vorzugsweise in die gleiche Richtung.

11. Fokussiereinrichtung nach Anspruch 10,
**dadurch gekennzeichnet, dass**
das erste Flächenstück (51) und das dritte Flächenstück (53) an gegenüberliegenden Längsseiten eines das zweite Flächenstück (52) bildenden streifenförmigen Abschnitts des Federelements (22, 23) vorgesehen sind, insbesondere derart, dass der streifenförmige Abschnitt einen U-förmigen Querschnitt aufweist.

12. Fokussiereinrichtung nach Anspruch 11,
**dadurch gekennzeichnet, dass**
das Federelement (22, 23) einen weiteren streifenförmigen Abschnitt aufweist, wobei an gegenüberliegenden Längsseiten des weiteren streifenförmigen Abschnitts ein viertes und ein fünftes Flächenstück des Federelements (22, 23) jeweils gegenüber einer Basisebene des weiteren streifenförmigen Abschnitts um wenigstens 70° und höchstens 100°, insbesondere um etwa 90°, umgebogen sind.

13. Fokussiereinrichtung nach zumindest einem der vorstehenden Ansprüche,
**dadurch gekennzeichnet, dass**
wenigstens ein Verstärkungs-Flächenstück (55) des Federelements gegenüber einem Basis-Flächenstück (57) um 180° umgebogen ist, insbesondere derart, dass sich ein doppellagiger Abschnitt ergibt,
wobei vorzugsweise das Federelement (22, 23) im Bereich des Verstärkungs-Flächenstücks (55) an dem ersten Führungsabschnitt (13) oder an dem zweiten Führungsabschnitt (15) befestigt ist.

14. Fokussiereinrichtung nach zumindest einem der vorstehenden Ansprüche,
**dadurch gekennzeichnet, dass**
für die elastische Verbindung des ersten Führungsabschnitts (13) mit dem zweiten Führungsabschnitt (15) zwei zumindest bereichsweise flächig ausgebildete Federelemente (22, 23) vorgesehen sind, die jeweils einen Versteifungsbereich (50) aufweisen, in welchem ein erstes Flächenstück (51) gegenüber einem zweiten Flächenstück (52) entlang einer Biegekante (54) umgebogen ist, wobei sich die Federelemente (22, 23) parallel beabstandet zueinander erstrecken,
wobei vorzugsweise die Federelemente (22, 23) an entgegengesetzten Stirnseiten des ersten Führungsabschnitts (13) und/oder des zweiten Führungsabschnitts (15) angebracht sind.

15. Optischer Sensor, insbesondere Codeleser, mit einem Lichtsender zum Aussenden von Sendelichtstrahlen und/oder mit einem Lichtempfänger zum Empfangen von Empfangslichtstrahlen, einem Objektiv als Sammeloptik für die Sendelichtstrahlen und/oder die Empfangslichtstrahlen und einer Fokussiereinrichtung (11) zum Verstellen des Objektivs,
**dadurch gekennzeichnet, dass**
die Fokussiereinrichtung (11) gemäß einem der vorstehenden Ansprüche ausgestaltet ist, wobei der erste Führungsabschnitt (13) an einem Träger des optischen Sensors befestigt oder einstückig mit diesem ausgebildet ist und das Objektiv in dem zweiten Führungsabschnitt (15) gehalten ist.

## Claims

1. A focusing device (11) for an optical system which has a carrier and an objective arranged thereat, wherein the focusing device comprises:
a first guide section (13) which is configured for fastening to the carrier or is designed in one piece therewith;
a second guide section (15) which forms a holder for the objective;
at least one spring element (22, 23) which forms an elastic connection of the first guide section (13) to the second guide section (15); and
an actuator (35) for adjusting the second guide section (15) in and against an adjustment direction (V) with respect to the first guide section (13),
wherein the at least one spring element (22, 23) is areal at least regionally;
and wherein the at least one spring element (22, 23) has at least one stiffening zone (50) in which a first surface section (51) of the spring element (22, 23) is bent over along a bending edge (54) with respect to a second surface section (52) of the spring element (22, 23),
**characterized in that**
the spring element (22, 23) has a perforation (61) at the bending edge (54) which facilitates a positionally exact bending over of the first surface section (51).

2. A focusing device in accordance with claim 1,
**characterized in that**
the spring element (22, 23) is produced from a sheet metal part (59), in particular a single-layer sheet metal part (59).

3. A focusing device in accordance with claim 1 or claim 2,
**characterized in that**
the bending edge (54) extends transversely to the adjustment direction (V) in an unloaded base position of the spring element (22, 23);
and/or
**in that** the spring element (22, 23) has a material weakening at the bending edge (54).

4. A focusing device in accordance with at least one of the preceding claims,
**characterized in that**
the first guide section (13) and the second guide section (15) are each designed as a single-piece element of metal or plastic.

5. A focusing device in accordance with at least one of the preceding claims,
**characterized in that**
the spring element (22, 23) has a base section (47) which comprises the second surface section (52) and which extends in a spring leaf plane extending transversely to the adjustment direction (V) in an unloaded base position of the spring element (22, 23).

6. A focusing device in accordance with at least one of the preceding claims,
**characterized in that**
the spring element (22, 23) is of frame shape, with leadthroughs (43) for fastening means (45) preferably being provided in respective corner zones (41) of the frame-like spring element (22, 23).

7. A focusing device in accordance with claim 6,
**characterized in that**
the second guide section (15) is arranged in a central cutout (37) of the frame-like spring element (22, 23) or extends into it.

8. A focusing device in accordance with at least one of the preceding claims,
**characterized in that**
the first guide section (13) has a central leadthrough (21) and the second guide section (15) is arranged in the central leadthrough (21) or extends into it.

9. A focusing device in accordance with at least one of the preceding claims,
**characterized in that**
the first surface section (51) is bent over by at least 70° and by at most 100°, preferably by approximately 90°, with respect to the second surface section (52).

10. A focusing device in accordance with claim 9,
**characterized in that**
a third surface section (53) of the spring element (22, 23) is likewise bent over, preferably in the same direction, by at least 70° and by at most 100°, in particular by approximately 90°, with respect to the second surface section (52).

11. A focusing device in accordance with claim 10,
**characterized in that**
the first surface section (51) and the third surface section (53) are provided at oppositely disposed longitudinal sides of a strip-shaped section of the spring element (22, 23) forming the second surface section (52), in particular such that the strip-shaped section has a U-shaped cross-section.

12. A focusing device in accordance with claim 11,
**characterized in that**
the spring element (22, 23) has a further strip-shaped section, with fourth and fifth surface sections of the spring element (22, 23) each being bent over by at least 70° and by at most 100°, in particular by approximately 90°, with respect to a base plane of the further strip-shaped section at oppositely disposed longitudinal sides of the further strip-shaped section.

13. A focusing device in accordance with at least one of the preceding claims,
**characterized in that**
at least one reinforcement surface section (55) of the spring element is bent over by 180° with respect to a base surface section (57), in particular such that a double-layer section results,
with the spring element (22, 23) preferably being fastened to the first guide section (13) or to the second guide section (15) in the region of the reinforcement surface section (55).

14. A focusing device in accordance with at least one of the preceding claims,
**characterized in that**
two spring elements (22, 23) which are areal at least regionally are provided for the elastic connection of the first guide section (13) to the second guide section (15) and each have a stiffening zone (50) in which a first surface section (51) is bent over along a bending edge (54) with respect to a second surface section (52), with the spring elements (22, 23) extending spaced apart from one another in parallel,
with the spring elements (22, 23) preferably being attached at opposite end faces of the first guide section (13) and/or of the second guide section (15).

15. An optical sensor, in particular a code reader, having a light transmitter for transmitting transmitted light beams and/or having a light receiver for receiving received light beams, having an objective as a converging optics for the transmitted light beams and/or for the received light beams, and having a focusing device (11) for adjusting the objective,
**characterized in that**
the focusing device (11) is configured in accordance with any one of the preceding claims, with the first guide section (13) being fastened to a carrier of the optical sensor or being formed in one piece therewith and with the objective being held in the second guide section (15).

## Revendications

1. Dispositif de focalisation (11) pour un système optique ayant un support et un objectif disposé sur celui-ci, ledit dispositif de focalisation comprenant :
une première portion de guidage (13) réalisée pour être fixée au support ou réalisée d'un seul tenant avec celui-ci,
une seconde portion de guidage (15) formant un moyen de maintien de l'objectif,
au moins un élément ressort (22, 23) formant une liaison élastique de la première portion de guidage (13) avec la seconde portion de guidage (15),
et
un actionneur (35) pour déplacer la seconde portion de guidage (15) par rapport à la première portion de guidage (13) dans une direction de déplacement (V) et en sens opposé à celle-ci,
dans lequel
ledit au moins un élément ressort (22, 23) est réalisé au moins localement à plat, et
ledit au moins un élément ressort (22, 23) présente au moins une zone de raidissement (50) dans laquelle une première partie surfacique (51) de l'élément ressort (22, 23) est pliée le long d'un bord de pliage (54) par rapport à une seconde partie surfacique (52) de l'élément ressort (22, 23),
**caractérisé en ce que**
l'élément ressort (22, 23) présente une perforation (61) sur le bord de pliage (54), qui facilite un pliage en position précise de la première partie surfacique (51).

2. Dispositif de focalisation selon la revendication 1,
**caractérisé en ce que**
l'élément ressort (22, 23) est fabriqué à partir d'une pièce en tôle (59), en particulier à couche unique.

3. Dispositif de focalisation selon la revendication 1 ou 2,
**caractérisé en ce que**
le bord de pliage (54) s'étend transversalement à la direction de déplacement (V), dans une position de base non chargée de l'élément ressort (22, 23),
et/ou
l'élément ressort (22, 23) présente un affaiblissement de matériau sur le bord de pliage (54).

4. Dispositif de focalisation selon l'une au moins des revendications précédentes,
**caractérisé en ce que**
la première portion de guidage (13) et la seconde portion de guidage (15) sont chacune réalisées comme un composant d'un seul tenant en métal ou en matière plastique.

5. Dispositif de focalisation selon l'une au moins des revendications précédentes,
**caractérisé en ce que**
l'élément ressort (22, 23) présente une portion de base (47) qui comprend la seconde partie surfacique (52) et qui, dans une position de base non chargée de l'élément ressort (22, 23), s'étend dans un plan de lame de ressort s'étendant transversalement à la direction de déplacement (V).

6. Dispositif de focalisation selon l'une au moins des revendications précédentes,
**caractérisé en ce que**
l'élément ressort (22, 23) est en forme de cadre, des traversées (43) pour des moyens de fixation (45) étant de préférence prévues dans des zones de coin (41) respectives de l'élément ressort (22, 23) en forme de cadre.

7. Dispositif de focalisation selon la revendication 6,
**caractérisé en ce que**
la seconde portion de guidage (15) est disposée dans un évidement central (37) de l'élément ressort (22, 23) en forme de cadre ou pénètre dans celui-ci.

8. Dispositif de focalisation selon l'une au moins des revendications précédentes,
**caractérisé en ce que**
la première portion de guidage (13) présente une traversée centrale (21) et la seconde portion de guidage (15) est disposée dans la traversée centrale (21) ou pénètre dans celle-ci.

9. Dispositif de focalisation selon l'une au moins des revendications précédentes,
**caractérisé en ce que**
la première partie surfacique (51) est repliée d'au moins 70° et au plus de 100°, de préférence d'environ 90°, par rapport à la seconde partie surfacique (52).

10. Dispositif de focalisation selon la revendication 9,
**caractérisé en ce que**
une troisième partie surfacique (53) de l'élément ressort (22, 23) est également repliée d'au moins 70° et au plus de 100°, en particulier d'environ 90°, par rapport à la seconde partie de surface (52), de préférence dans la même direction.

11. Dispositif de focalisation selon la revendication 10,
**caractérisé en ce que**
la première partie surfacique (51) et la troisième partie surfacique (53) sont prévues sur des côtés longitudinaux opposés d'une portion en forme de bande de l'élément ressort (22, 23), laquelle constitue la seconde partie surfacique (52), en particulier de telle sorte que la portion en forme de bande présente une section transversale en forme de U.

12. Dispositif de focalisation selon la revendication 11,
**caractérisé en ce que**
l'élément ressort (22, 23) présente une autre portion en forme de bande, et, sur des côtés longitudinaux opposés de l'autre portion en forme de bande, une quatrième et une cinquième partie surfacique de l'élément ressort (22, 23) sont chacune repliées d'au moins 70° et au plus de 100°, en particulier d'environ 90°, par rapport à un plan de base de l'autre portion en forme de bande.

13. Dispositif de focalisation selon l'une au moins des revendications précédentes,
**caractérisé en ce que**
au moins une partie surfacique de renforcement (55) de l'élément ressort est repliée de 180° par rapport à une partie surfacique de base (57), en particulier de telle sorte qu'il en résulte une portion à couche double,
dans la zone de la partie surfacique de renforcement (55), l'élément ressort (22, 23) étant de préférence fixé à la première portion de guidage (13) ou à la seconde portion de guidage (15).

14. Dispositif de focalisation selon l'une au moins des revendications précédentes,
**caractérisé en ce que**
pour la liaison élastique de la première portion de guidage (13) avec la seconde portion de guidage (15), il est prévu deux éléments ressorts (22, 23) qui sont réalisés au moins localement à plat et qui présentent chacun une zone de raidissement (50) dans laquelle une première partie surfacique (51) est repliée par rapport à une seconde partie surfacique (52) le long d'un bord de pliage (54), les éléments ressorts (22, 23) s'étendant parallèlement et à distance l'un de l'autre,
de préférence, les éléments ressorts (22, 23) étant montés sur des faces frontales opposées de la première portion de guidage (13) et/ou de la seconde portion de guidage (15).

15. Capteur optique, en particulier lecteur de code, comportant un émetteur de lumière pour émettre des rayons lumineux d'émission et/ou un récepteur de lumière pour recevoir des rayons lumineux de réception, un objectif comme optique collectrice pour les rayons lumineux d'émission et/ou pour les rayons lumineux de réception, et un dispositif de focalisation (11) pour le réglage de l'objectif,
**caractérisé en ce que** le dispositif de focalisation (11) est réalisé selon l'une des revendications précédentes, la première portion de guidage (13) étant fixée sur un support du capteur optique ou étant réalisée d'un seul tenant avec celui-ci, et l'objectif étant maintenu dans la seconde portion de guidage (15).
